# EUROPEAN PATENT SPECIFICATION

(11) **EP 3 370 022 B1**
(45) Date of publication and mention of the grant of the patent: **08.12.2021**
(21) Application number: 18154358.8
(22) Date of filing: 31.01.2018
(51) Int. Cl.: F25D 3/06, F25D 23/02, A47B 31/00, E05C 3/04, E05B 63/00, E05D 3/02, E05D 7/10, E05D 11/00, E05D 5/12

(54) **INSULATED TRANSPORT CABINETS FOR FOOD AND THE LIKE**
ISOLIERTE TRANSPORTKÄSTEN FÜR LEBENSMITTEL UND DERGLEICHEN
ARMOIRES DE TRANSPORT ISOLÉES POUR PRODUITS ALIMENTAIRES ET ANALOGUES

(30) Priority: 08.02.2017 US 201715427325
(43) Date of publication of application: 05.09.2018
(73) Proprietor: InterMetro Industries Corporation, Wilkes-Barre, PA 18705 (US)
(72) Inventor: Olson, Jeffrey C., Wilkes-Barre, Pennsylvania 18705 (US); Robinson, Todd, Wilkes-Barre, Pennsylvania 18705 (US)
(74) Representative: Inspicos P/S

(56) References cited:
- EP-A1- 2 966 000
- JP-A- H1 035 745
- JP-A- 2007 145 424
- US-A- 5 312 011
- US-A1- 2005 023 304
- US-A1- 2015 377 542
- US-B1- 6 986 434

## Description

### FIELD

The present disclosure relates to insulated transport cabinets for food and the like.

### BACKGROUND

This section provides background information related to the present disclosure which is not necessarily prior art.

Insulated cabinets can be used, for example, to keep food hot or cold. Insulated cabinets may include wheels, or a cart having wheels, so that they can be readily transported between locations. An insulated transport cabinet may include multiple compartments or sections. Different cabinet sections may be used to transport food of different temperatures, for example. Transport cabinets may be front-loaded, so that a hinged door is capable of pivoting between a closed position and an open position to provide access to a front compartment. Thus, transport cabinets include a body with an interior compartment, a hinged door, and a seal or gasket between the door and the body. Technology of this type may be seen in: US2005/023304, JP H10 35745, US2015/377542 and US6986434.

### SUMMARY

This section provides a general summary of the disclosure, and is not a comprehensive disclosure of its full scope or all of its features.

The present invention defines a cabinet according to claim 1. Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a front right perspective view of an insulated transport cabinet according to the principles of the present disclosure;
FIG. 2 is a front right exploded perspective view of a cabinet section of the insulated transport cabinet of FIG. 1;
FIG. 3 is a front left perspective view of the cabinet section of FIG. 2 in the open position;
FIG. 4 is a top cross-sectional view of a hinge of the cabinet taken at line 4-4 of FIG. 1;

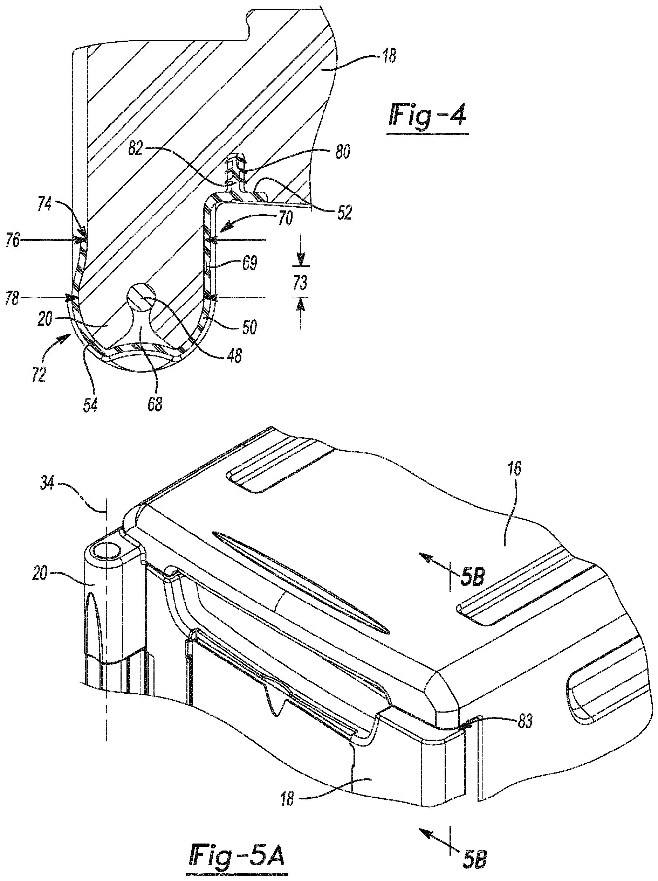

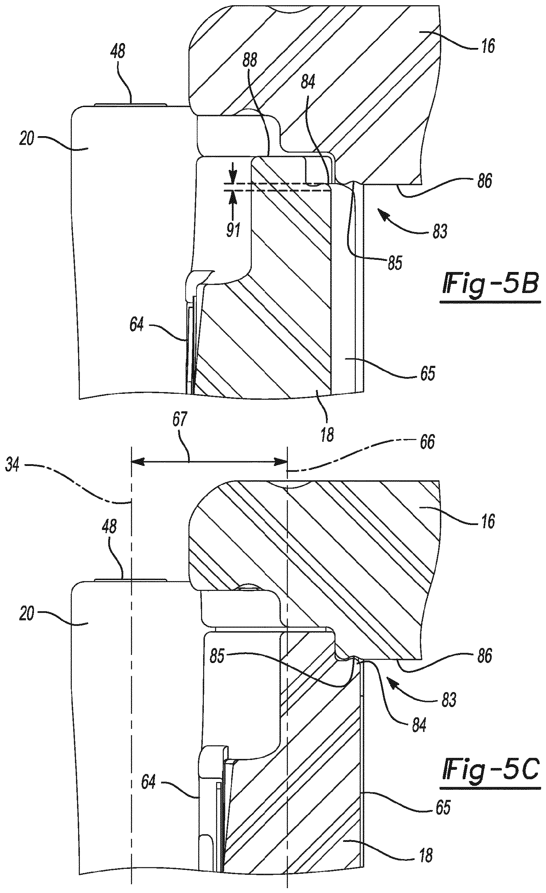

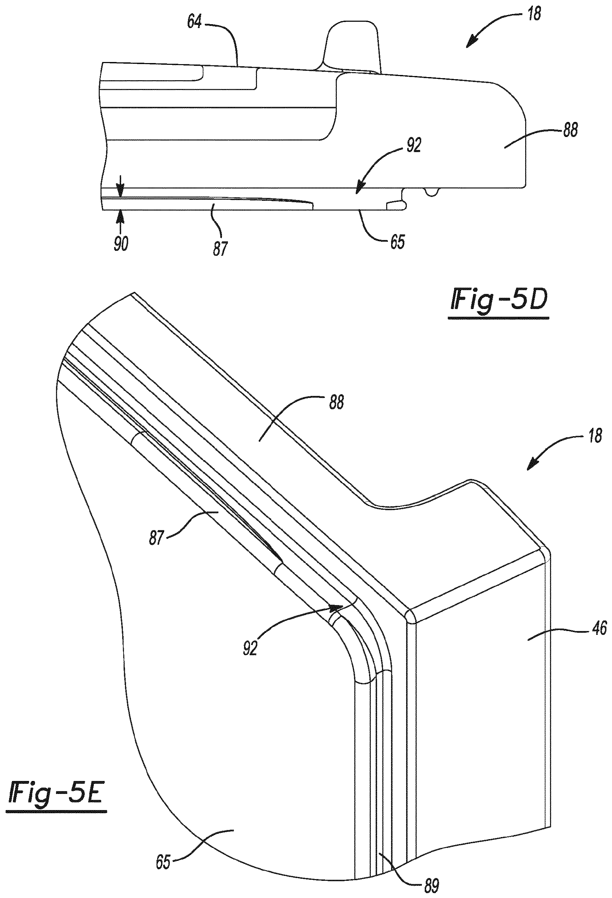

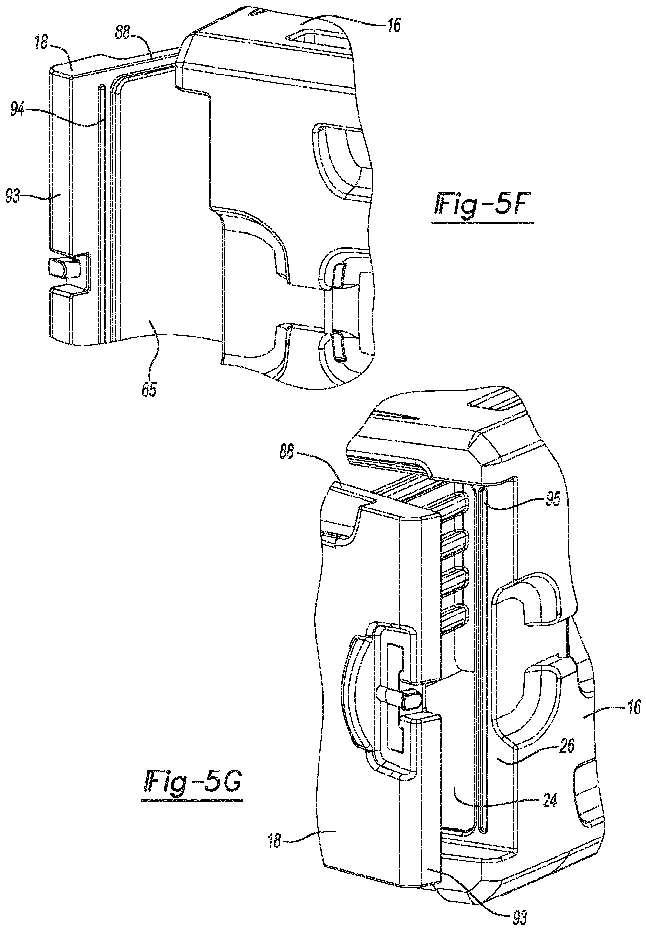

FIGS. 5A-5G show a sealing structure of the cabinet; FIG. 5A is a front right partial perspective view showing a door pivoted about 3° from the closed position; FIG. 5B is a side partial cross sectional view of the sealing structure of FIG. 5A taken at line 5B-5B of FIG. 5A showing the door pivoted about 3° from the closed position; FIG. 5C is a side partial cross sectional view of the sealing structure of FIG. 5A taken at line 5B-5B of FIG. 5A showing the door in the closed position; FIG. 5D is a partial top view of the door; FIG. 5E is a left back partial perspective view of the door; FIG. 5F is a right back partial perspective view showing a back surface of the door in the open position; FIG. 5G is a right front partial perspective view showing a front of a housing;
FIGS. 6A-6C show a latch of the cabinet; FIG. 6A is a front right partial perspective view; FIG. 6B is a back right partial perspective view; FIG. 6B is a top partial cross sectional view taken at line 6C-6C of FIG. 6B; and
FIGS. 7A-7C show a method of assembling or disassembling the cabinet; FIG. 7A is a front left partial perspective view showing assembly of the door to a hinge pin; FIG. 7B is a front right partial perspective view showing a hinge cover in an open position; and FIG. 7C is a front right partial perspective view showing the hinge cover in the closed position.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Insulated transport cabinets for food and the like may be used in a variety of applications. Certain applications (e.g., room-to-room food delivery in a hospital or hotel) require frequent opening and closing of the door to access contents of the cabinet. Thus, hinge and latch must be robust and capable of withstanding repeated use.

Some transport cabinets employ slip hinges to pivotally connect a door and a housing of the cabinet. Slip hinges are susceptible to damages through the course of normal use. For example, the hinges often become broken or bent.

Insulated cabinets can also employ a thermal seal, for example, a compressible gasket or a labyrinth seal. Compressible gaskets typically become damaged or worn through frequent use. In some situations, compressible gaskets may fall off or otherwise disengage the carrier as a result of use. Labyrinth seals are less effective than gasket seals in providing insulation. Furthermore, they are not liquid-tight and are therefore ineffective at containing spills inside the carrier. Compressible gaskets and labyrinth seals work when they are compressed by the door. Thus, they prevent the door from staying closed without a latch. Certain carriers are made from expanded polypropylene (EPP). These carriers may utilize the inherent compressibility of EPP to the door with a tight or interference fit. However, doors on this style of EPP carriers may be difficult to open and close.

Insulated cabinets also include latches, such as over-center draw latches, to hold the door in the closed position and engage the seal or gasket. Over-center draw latches may be awkward to use and can create pinch points. Furthermore, these latches are prone to damage such as breakage through repeated use.

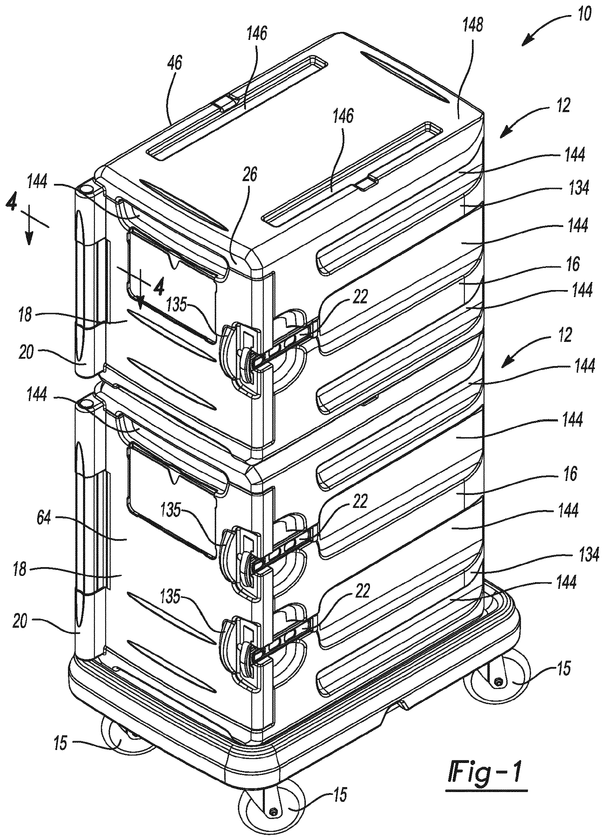

The present disclosure provides an insulated transport cabinet and a mounting and sealing structure for an insulating transport cabinet. The mounting and sealing structure includes a hinge and a seal between a door and a housing of the cabinet. With reference to FIG. 1, an insulated transport cabinet or carrier 10 for food and the like is provided. The insulated transport cabinet 10 can include one or more cabinet sections 12 and a cart 14. The cart 14 includes a plurality of wheels 15.

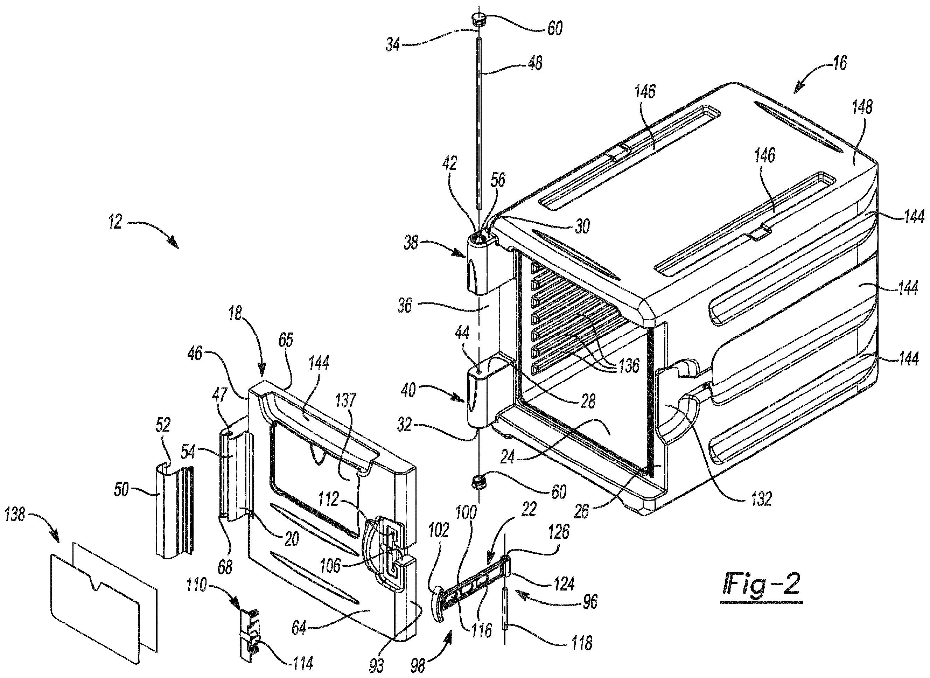

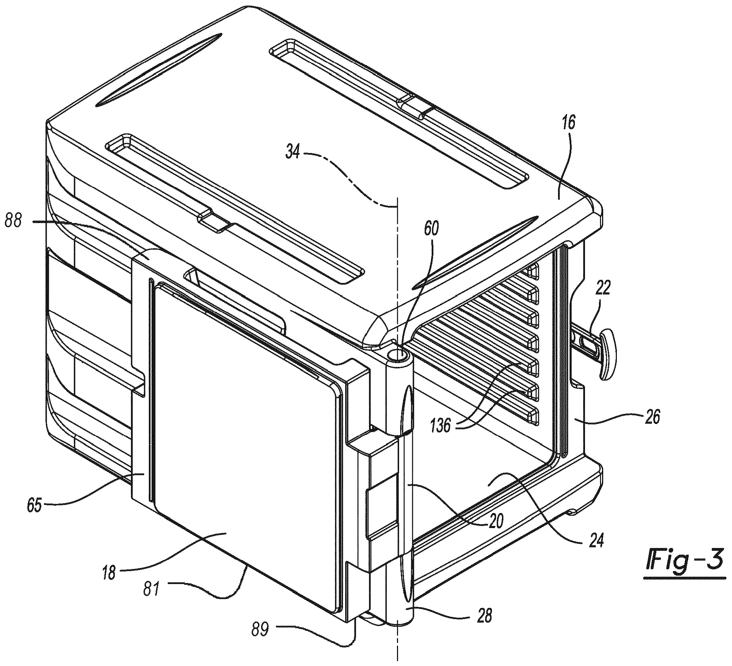

Referring now to FIGS. 2-3, each cabinet section 12 includes a housing or body 16 and a door 18. The door 18 is pivotally connected to the housing 16 by a hinge 20. The door 18 can be secured in the closed position by a latch 22. The door 18 is configured to pivot up to about 270° between the closed position (shown in FIG. 1) and the open position (shown in FIG. 3). An interior compartment 24 of the cabinet section 12 is accessible when the door 18 is in the open position.

The housing 16 includes a front surface 26. The interior compartment 24 extends into the front surface 26. The housing 16 further includes a barrel portion 28 adjacent to the front surface 26. The barrel portion 28 may be integrally formed with the front surface 26. The barrel portion 28 extends between a top end 30 and a bottom end 32. The barrel portion 28 includes a first longitudinal axis 34 extending through its center. The barrel portion 28 further includes a gap 36 located intermediate the top end 30 and the bottom end 32. The gap 36 separates the barrel portion 28 into a top barrel section 38 and a bottom barrel section 40. The top barrel section 38 includes a first passageway 42. The first passageway 42 is substantially aligned with the first longitudinal axis 34. The bottom barrel section 40 includes a second passageway 44. The second passageway 44 is substantially aligned with the first longitudinal axis 34.

The hinge 20 is adjacent to a left side surface 46 of the door 18. The hinge 20 may be integrally formed with the door 18. The hinge 20 includes a third passageway 47. The third passageway 47 is substantially aligned with the first longitudinal axis 34. A hinge pin 48 passes through the first passageway 42, the third passageway 47, and the second passageway 44 to pivotally connect the door 18 to the housing 16.

The cabinet section 12 further includes a hinge cover 50. As best shown in FIG. 4, the hinge cover 50 is fixed to the door 18. The hinge cover 50 has an inner surface 52 that is adapted to complement an outer surface 54 of the hinge 20.

Returning to FIGS. 2-3, the first and second passageways 42, 44 may include counterbores 56. Caps 60 may at least partially engage the counterbores 56 to prevent the hinge pin 48 from backing out of the respective barrel section 38, 40.

The door 18 includes a front surface 64 and a back surface 65. The front surface 64 and the back surface 65 are substantially parallel. The door 18 further includes a center plane 66 (shown in FIG. 5C) disposed between the front surface 64 and the back surface 65. The center plane 66 is substantially parallel to the front surface 64 and the back surface 65. The first longitudinal axis 34 is outside the center plane of the door 18. Thus, there is an offset 67 (shown in FIG. 5C) between the center plane 66 and the axis of rotation, the first longitudinal axis 34, of the door 18.

With reference to FIG. 4, the hinge 20 may also include a slot 68 formed in the outer surface 54 of the hinge 20. The slot 68 may be adjacent to the third passageway 47 and substantially parallel to the first longitudinal axis 34. The slot 68 may overlap an edge of the third passageway 47 so that the slot 68 and the third passageway 47 are connected. Thus, the third passageway 47 may not be fully enclosed. Engagement of the inner surface 52 of the hinge cover 50 with the outer surface 54 of the hinge 20 can enclose the slot 68 to maintain the door 18 on the hinge pin 48.

The hinge cover 50 may include a living hinge 69 disposed between a fixed portion 70 of the hinge cover 50 and a free portion 72 of the hinge cover 50. There may be an offset 73 between the living hinge 69 and the first longitudinal axis 34. More specifically, the living hinge 69 may be disposed between the front surface 64 of the door 18 and the first longitudinal axis 34. The free portion 72 of the hinge cover 50 is adapted to pivot about the living hinge 69 between a locked position and an unlocked position. An outer portion 74 of the hinge cover 50 may be shaped to snap onto the hinge 20 and maintain the hinge cover 50 in the locked position, creating an over-center snap fit. In one example, a first width 76 of the outer surface of the hinge 20 at the outer portion 74 of the hinge cover 50 may be less than a second width 78 of the outer surface of the hinge 20 at the first longitudinal axis 34. Thus, the hinge cover 50 may be held in the locked position.

The hinge cover 50 may be fixed to the door 18. The front surface 64 of the door 18 may include a receiver 80 and the hinge cover 50 may include a protrusion 82 engaging the receiver 80 to fix the hinge cover 50 to the door 18. By way of non-limiting example, the protrusion 82 may have a tree-shape such that branches of the tree maintain the protrusion 82 in the receiver 80. However, other shapes of protrusions 82 and receivers 80 are contemplated within the scope of the present disclosure.

Referring to FIGS. 5A-5G, the cabinet section 12 also includes a sealing structure 83 between the door 18 and the housing 16. The sealing structure 83 isolates the interior compartment 24 from the outside environment to provide better insulation. In certain aspects, the sealing structure 83 may also provide a fluid barrier. In still other aspects, the sealing structure 83 may help maintain the door 18 in the closed position.

The sealing structure 83 includes a first rib 84 configured to engage a first groove 85. The first groove 85 extends into a peripheral wall 86 of the interior compartment 24 of the housing 16. The first rib 84 extends around a perimeter of the door 18 adjacent to the back surface 65 of the door 18. The first rib 84 is configured to engage the first groove 85 when the door 18 is in the closed position. The first rib 84 is configured to disengage the first groove 85 when the door 18 is in the open position.

Referring now to FIGS. 5D-5E, The first rib 84 includes a top rib 87 adjacent to a top surface 88 of the door 18, a bottom rib 81 (which is a mirror image of the top rib 87) adjacent to a bottom surface (best seen in FIG. 3) of the door 18, and a first side rib 89 adjacent to the left side surface 46 of the door 18. Each of the top rib 87, the bottom rib, and the first side rib 89 includes a width 90 and a height 91 (best shown on FIG. 5B) substantially perpendicular to the width 90. The width 90 may be tapered such that it is greater at a center portion than at opposing end portions. The height 91 is tapered such that it is greater at a center portion than at opposing end portions. Both the width 90 and the height 91 may be tapered. A corner of the perimeter of the door 18 may include a flat portion 92 disposed between the top rib 87 and the first side rib 89.

In some embodiments, the first rib 84 does not extend to an area adjacent to a right side surface 93 of the door 18. With reference to FIGS. 5F-5G, the sealing structure 83 may further include a second rib 94 and a second groove 95. The second rib 94 is included in the back surface 65 of the door 18. The second rib 94 may be vertical or parallel to the right side surface 93 of the door 18. The second groove 95 is included in the front surface 26 of the housing 16. The second groove 95 may be sized and shaped to complement the second rib 94. The second rib 94 engages the second groove 95 when the door 18 is in the closed position.

A combination of the sealing structure 83 geometry and the hinge 20 geometry enables quick disengagement of the first rib 84 from the first groove 85. With respect to the sealing structure 83, the tapered shape of the top 87, bottom, and first side 89 ribs and complementary shape of the first groove 85 allows for easy engagement and disengagement as the door 18 is closed and opened. The flat portion 92 enables quick disengagement with minimal resistance near the first longitudinal axis 34 (i.e., the axis of rotation of the door 18). The placement of the second rib 94 and the second groove 95 in the back surface 65 of the door 18 and the front surface 26 of the housing 16, respectively, similarly minimizes resistance to opening and closing the door. With respect to the hinge 20, the offset 67 from the first longitudinal axis 34, enables quicker disengagement of the first rib 84 from the first groove 85 as the door is opened than if the rotational axis of the door 18 were aligned with the center plane of the door 18. Thus, the first rib 84 may disengage the first groove 85 when the door 18 is pivoted greater than or equal to about 5°, optionally greater than or equal to about 3°, between the closed and the open positions. The door 18 may be opened and closed with very little drag and therefore minimal operator effort.

Because the sealing structure 83 operates without significant compression, it is functional as soon as the door is in the closed position, whether or not the latch 22 (shown in FIG. 1) is used. Furthermore, because the sealing structure 83 is integral to the cabinet section 12, it cannot fall off or become disengaged with the cabinet section 12. The sealing structure 83 may be effective in both providing insulating and creating a barrier to fluid leaks.

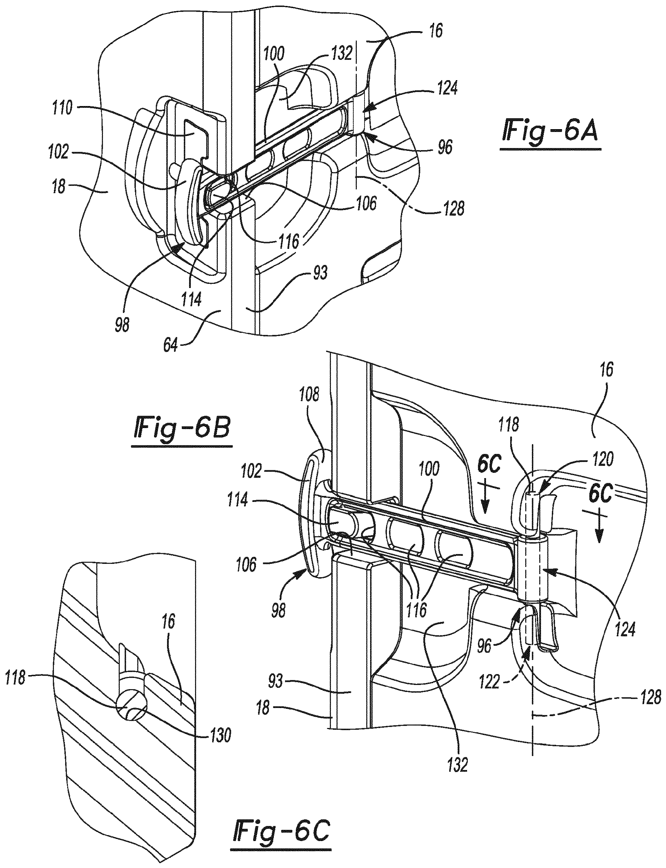

Referring now to FIGS. 6A-6C, the cabinet section 12 includes the latch 22 to maintain the door 18 in the closed position. The latch 22 may be moved between a locked position and an unlocked position when the door 18 is closed. The latch 22 includes a fixed end 96 pivotally connected to the housing 16 and a free end 98 configured to engage and disengage the door when the latch 22 is in a locked or unlocked position, respectively. The latch 22 further includes a stem 100 extending between the fixed end 96 and the free end 98. The latch 22 also includes a holder 102 adjacent to the free end 98. The stem 100 and holder 102 may be integrally formed and may have a T-shaped profile so that the holder 102 is substantially perpendicular to the stem 100.

The right side surface 93 of the door 18 is opposite the left side surface 46 and substantially perpendicular to the left side surface 46. The right side surface 93 of the door 18 may include a latch slot 106. The stem 100 of the latch 22 is at least partially disposed in the latch slot 106 when the latch 22 is in a locked position. A back surface 108 of the holder 102 engages the front surface 64 of the door 18 when the latch 22 is in the locked position. Engagement of the back surface 108 of the holder 102 with the front surface 64 of the door 18 maintains the door 18 in the closed position.

The cabinet section 12 may also include a latch keeper 110. The latch keeper 110 may be fixed to the front surface 64 of the door 18. More specifically, the latch keeper 110 may be at least partially disposed within a recessed portion 112 of the front surface 64 of the door 18. The latch keeper 110 may include an extension 114 adapted to engage a receptacle 116 in the stem 100 of the latch 22. Engagement of the extension 114 with the receptacle helps maintain the latch 22 in the locked position. The latch 22 may include a plurality of receptacles 116.

The latch 22 may comprise an elastomeric material. In certain aspects, the latch 22 may be stretched or energized as it is placed into a locked position. The elasticity of the latch 22 enables the holder 102 to apply a force to the door 18 to hold the door 18 in the closed position. The elastomeric material is resilient to repeated use and less susceptible to breakage than compared to certain other latches, such as over-center draw latches.

The latch 22 may be pivotally connected to the housing 16 by a latch pin 118. The latch pin 118 may include first and second ends 120, 122 that are fixed to the housing 16. The latch 22 may further include a tubular portion 124 adjacent to the fixed end 96. The tubular portion 124 may include a passage 126 (shown in FIG. 2) extending along a second longitudinal axis 128. The latch pin 118 may pass through the passage 126 so that it is substantially aligned with the second longitudinal axis 128. The latch 22 is adapted to pivot about the second longitudinal axis 128 between the unlocked position and the locked position. With reference to FIG. 6C, the housing 16 may further include an undercut 130. The undercut 130 may be shaped to complement the latch pin 118. The first and second ends 120, 122 of the latch pin 118 may engage the undercut 130 to maintain the latch pin 118 in the housing 16. The latch 22 may be disposed in a pocket 132 included in a right side surface 134 of the housing 16.

Returning now to FIG. 1, an insulated transport cabinet 10 may include multiple cabinet sections 12. The cabinet sections 12 may be different sizes, or they may be uniformly sized (not shown). Each cabinet section 12 may include one or more handles 135 that can be used by an operator to open and close the door 18 to access the interior compartment 24 (shown in FIG. 2). Each cabinet section 12 may also include multiple latches 22 and associated components (e.g., latch keeper 110, latch pin 118), and geometry (e.g., latch slot 106, recessed portion, pocket 132). As shown in FIGS. 2-3, the interior compartment 24 may include a plurality of opposing ridges 136. The plurality of opposing ridges 136 is configured to permit insertion and removal of shelves or trays (not shown). The door 18 may include a rectangular recess 137 for a label holder 138

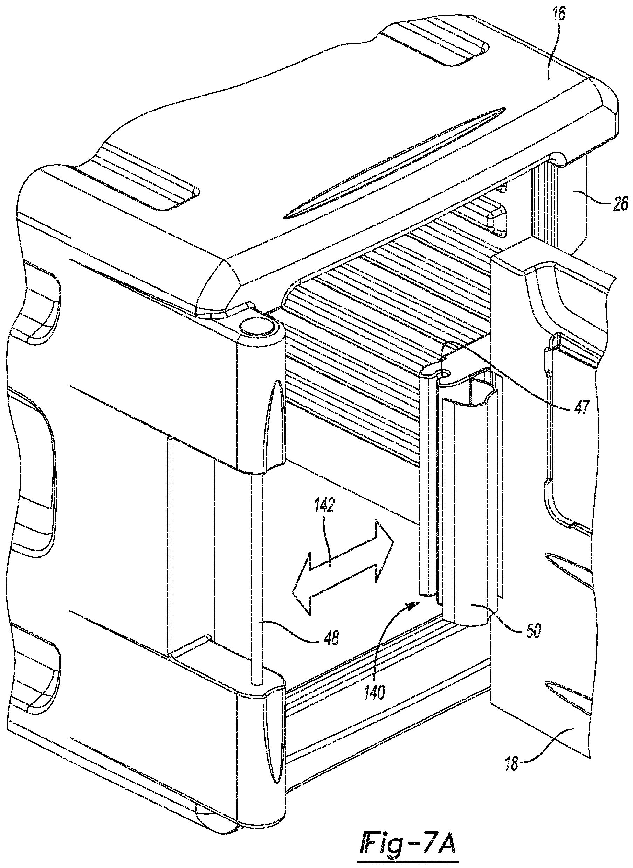

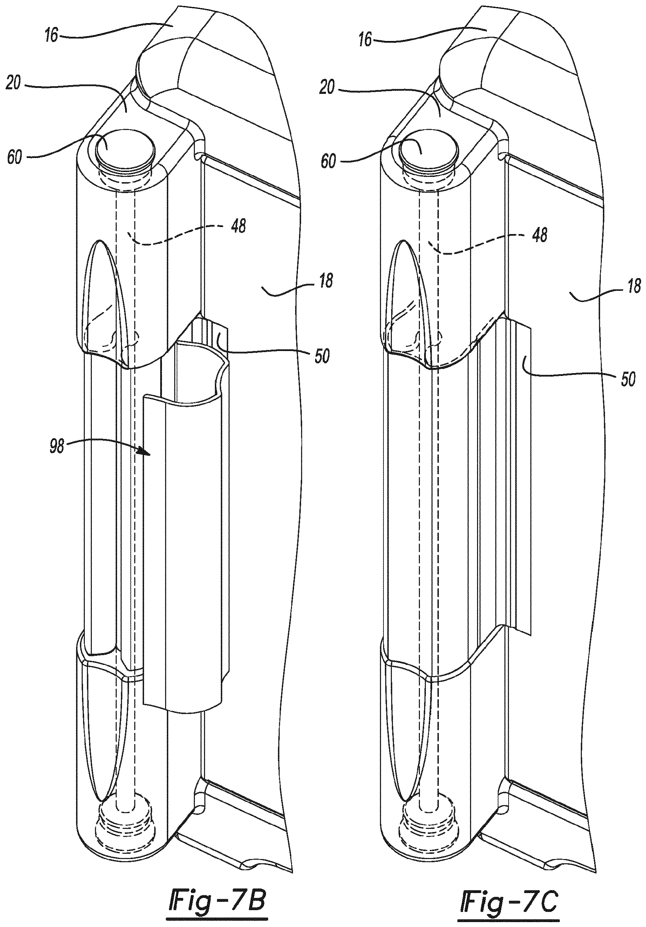

With reference to FIGS. 7A-7C, the present disclosure also provides a method of assembling the insulated transport cabinet 10. The housing 16 may be provided with the latch 22 and hinge pin 48 in place. Referring to FIG. 7A, the door 18 may be oriented at a 90° angle to the front surface 26 of the housing 16. The hinge cover 50 may be in the unlocked position. Thus, an open side 140 of the hinge 20 comprising the third passageway 47 and the slot 68 is oriented toward the hinge pin 48. The door 18 is translated in the direction shown at 142 until the third passageway 47 of the hinge 20 is disposed around the hinge pin 48, as shown in FIG. 7B. The free end 98 of the hinge cover 50 is snapped over the hinge 20, as shown in FIG. 7C. Thus, the hinge cover 50 is changed from the unlocked to the locked position. In the locked position, the hinge cover 50 maintains the door 18 on the housing 16. The door 18 may be easily removed from the housing 16 by reversing the method steps described above.

Returning now to FIGS. 1-2, multiple cabinet sections 12 may be stacked on top of one another. The cabinet sections 12 may be stacked on top of the cart 14 to assemble the insulated transport cabinet 10. The cabinet section 12 may include one or more grooves or handles 144 for lifting, moving the cabinet sections 12. The handles may be provided in a back surface of the housing 16 (not shown), the side surfaces 46, 132 of the housing 16, the front surface 26 of the housing 16, or the front surface 64 of the door 18.

A pair of grooves 146 may be included in a top surface 148 of the housing 16. A pair of ribs shaped to complement the pair of grooves 146 may extend from a bottom surface of the housing 16 (not shown). The pair of ribs of the bottom surface of one cabinet section 12 engages the pair of grooves 146 of the top surface of another cabinet section 12 to maintain the cabinet sections 12 on top of one another and prevent shifting and sliding. Similar ribs and grooves may be provided between a bottom cabinet section 12 and the cart 14 to maintain the cabinet section 12 on the cart 14 during transport. Although the insulated transport cabinet 10 described herein makes reference to left and right sides, it should be understood that the features of each side can be reversed within the scope of the present disclosure.

## Claims

1. An insulated transport cabinet for food and the like including a door mounting and sealing structure comprising:
a housing (16) comprising:
an interior compartment (24) having a peripheral wall (86); and
a first groove (85) extending into the peripheral wall; and
a door (18) comprising:
a first side surface (46), a second side surface (93) opposite the first side surface, and a back surface (65) substantially perpendicular to the first side surface and the second side surface; and
a hinge (20) adjacent to and integrally formed with the first side surface; the door being pivotally connected to the housing by the hinge, and the door being adapted to pivot between an open position and a closed position,
**characterized in that**:
the insulated transport cabinet comprises a sealing structure (83) for isolating the interior compartment (24) from the outside environment,
the sealing structure (83) comprises a first rib (84) extending along at least a portion of a perimeter of the door adjacent to the back surface, the rib being shaped and sized to complement the first groove of the housing, and
the first rib includes a top rib that engages the first groove of the housing when the door is in the closed position, the top rib extending a length and is tapered along the length so that a cross-sectional height (91) of the top rib at a lengthwise center of the top rib is greater than a cross-sectional height of the top rib at opposing lengthwise ends of the top rib.

2. The insulated transport cabinet of claim 1, wherein the top rib (87) is disposed adjacent to a top surface (88) of the door, and wherein the first rib further comprises a bottom rib (81) disposed adjacent to a bottom surface of the door, and a first side rib (89) disposed adjacent to the first side surface of the door.

3. The insulated transport cabinet of claim 2, wherein each of the top rib, the bottom rib, and the first side rib extends a length and includes a width (90) and a height (91) substantially perpendicular to the width, and wherein the width of each of the top rib, the bottom rib, and the first side rib is tapered such that it is greater at a lengthwise center than at opposing lengthwise ends.

4. The insulated transport cabinet of claim 3, wherein both the width and the height of each of the top rib, the bottom rib, and the first side rib are tapered such the width is greater at the the lengthwise center than at opposing lengthwise ends and the height is greater at the lengthwise center than at opposing lengthwise ends.

5. The insulated transport cabinet of claim 2, wherein a corner of the perimeter of the door adjacent to the top surface and the second side surface includes a flat portion (92).

6. The insulated transport cabinet of claim 1, wherein:
a front surface (26) of the housing includes a second groove (95) and the back surface of the door includes a second rib (94) sized and shaped to complement the second groove;
the second rib is substantially parallel to the second side surface of the door and is disposed adjacent to the second surface of the door; and
the second rib engages the second groove when the door is in the closed position.

7. The insulated transport cabinet of claim 1, wherein:
the housing further comprises:
a barrel portion (28) adjacent to a front surface (26) and extending between a top end (30) and a bottom end (32), the barrel portion comprising:
a longitudinal axis (34) extending through a center of the barrel portion;
a gap (36) located intermediate the top end and the bottom end, the gap separating the barrel portion into a top barrel section (38) and a bottom barrel section (40);
a first passageway (42) in the top barrel section, the first passageway substantially aligned with the longitudinal axis; and
a second passageway (44) in the bottom barrel section, the second passageway substantially aligned with the longitudinal axis, wherein:
the hinge further comprises a third passageway (47) substantially aligned with the longitudinal axis;
a hinge pin (48) passes through the first passageway, the third passageway, and the second passageway; and
the door is adapted to pivot about the longitudinal axis to move between the open position and the closed position.

8. The insulated transport cabinet of claim 7, wherein the door includes a center plane (66) disposed between the back surface of the door (65) and the front surface of the door (64), the center plane is substantially parallel to the front surface and the back surface, and the longitudinal axis is offset from the center plane.

9. The insulated transport cabinet of claim 8, wherein the first rib of the door and the groove of the housing are fully disengaged when the door is pivoted greater than or equal to about 3° about the longitudinal axis from the closed position.

10. The insulated transport cabinet of claim 7, further comprising a latch (22) comprising:
a fixed end (96) pivotally connected to the housing;
a free end (98);
a stem (100) extending between the fixed end and the free end; and
a holder (102) adjacent to the free end;
wherein the latch is adapted to pivot between an unlocked position and a locked position; and
wherein the stem of the latch is at least partially disposed in a latch slot (106) and a back surface of the holder (108) engages a front surface of the door when the latch is in a locked position to maintain the door in the closed position.

11. The insulated transport cabinet of claim 1, wherein the first groove and the first rib are configured to create a fluid-tight seal when the door is in the closed position to prevent fluid leaks.

12. The insulated transport cabinet of claim 2, wherein a cross-section of each of the top rib the bottom rib, and the first side rib taken transverse to a respective length of each of the top rib, the bottom rib, and the first side rib is non-uniform along the respective length of each of the top rib, the bottom rib and the first side rib.

## Patentansprüche

1. Isolierter Transportkasten für Lebensmittel und dergleichen mit einer Türbefestigungs- und Dichtungsstruktur, umfassend:
ein Gehäuse (16), umfassend:
ein Innenfach (24) mit einer Umfangswand (86); und
eine erste Nut (85), die sich in die Umfangswand erstreckt; und
eine Tür (18), umfassend:
eine erste Seitenfläche (46), eine zweite Seitenfläche (93) gegenüber der ersten Seitenfläche und eine hintere Fläche (65), die im Wesentlichen senkrecht zu der ersten Seitenfläche und der zweiten Seitenfläche ist; und
ein Scharnier (20), das angrenzend an die erste Seitenfläche und einstückig mit dieser ausgebildet ist,
wobei die Tür durch das Scharnier schwenkbar mit dem Gehäuse verbunden ist und die Tür dazu angepasst ist,
zwischen einer offenen Position und einer geschlossenen Position zu schwenken,
**dadurch gekennzeichnet, dass**:
der isolierte Transportkasten eine Dichtungsstruktur (83) zum Isolieren des Innenfachs (24) von der Außenumgebung umfasst,
die Dichtungsstruktur (83) eine erste Rippe (84) umfasst, die sich entlang wenigstens eines Abschnitts eines Umfangs der Tür neben der hinteren Fläche erstreckt, wobei die Rippe geformt und in der Größe bemessen ist, um die erste Nut des Gehäuses zu ergänzen, und
die erste Rippe eine obere Rippe umfasst, die in die erste Nut des Gehäuses eingreift, wenn sich die Tür in der geschlossenen Position befindet, wobei sich die obere Rippe über eine Länge erstreckt und sich entlang der Länge verjüngt, so dass eine Querschnittshöhe (91) der oberen Rippe an einer Längsmitte der oberen Rippe größer ist als eine Querschnittshöhe der oberen Rippe an gegenüberliegenden Längsenden der oberen Rippe.

2. Isolierter Transportkasten nach Anspruch 1, wobei die obere Rippe (87) benachbart zu einer oberen Fläche (88) der Tür angeordnet ist und wobei die erste Rippe ferner eine untere Rippe (81), die benachbart zu einer unteren Fläche der Tür angeordnet ist, und eine erste Seitenrippe (89) umfasst, die neben der ersten Seitenfläche der Tür angeordnet ist.

3. Isolierter Transportkasten nach Anspruch 2, wobei sich jede der oberen Rippe, der unteren Rippe und der ersten Seitenrippe über eine Länge erstreckt und eine Breite (90) und eine Höhe (91) im Wesentlichen senkrecht zur Breite umfasst und wobei die Breite jeder der oberen Rippen, der unteren Rippe und der ersten Seitenrippe so verjüngt ist, dass sie an einer Längsmitte größer ist als an gegenüberliegenden Längsenden.

4. Isolierter Transportkasten nach Anspruch 3, wobei sowohl die Breite als auch die Höhe jeder der oberen Rippe, der unteren Rippe und der ersten Seitenrippe so verjüngt sind, dass die Breite in der Längsmitte größer ist als an den gegenüberliegenden Längsenden und die Höhe in der Längsmitte größer ist als an den gegenüberliegenden Längsenden.

5. Isolierter Transportkasten nach Anspruch 2, wobei eine Ecke des Umfangs der Tür angrenzend an die obere Fläche und die zweite Seitenfläche einen flachen Abschnitt (92) umfasst.

6. Isolierter Transportkasten nach Anspruch 1, wobei:
eine vordere Fläche (26) des Gehäuses eine zweite Nut (95) aufweist und die hintere Fläche der Tür eine zweite Rippe (94) aufweist, die so bemessen und geformt ist,
um die zweite Nut zu ergänzen;
die zweite Rippe im Wesentlichen parallel zur zweiten Seitenfläche der Tür und angrenzend an die zweite Fläche der Tür angeordnet ist; und
die zweite Rippe in die zweite Nut eingreift, wenn sich die Tür in der geschlossenen Position befindet.

7. Isolierter Transportkasten nach Anspruch 1, wobei:
das Gehäuse ferner umfasst:
einen Zylinderabschnitt (28), der an eine vordere Fläche (26) angrenzt und sich zwischen einem oberen Ende (30) und einem unteren Ende (32) erstreckt, wobei der Zylinderabschnitt umfasst:
eine Längsachse (34), die sich durch eine Mitte des Zylinderabschnitts erstreckt;
eine Lücke (36), die zwischen dem oberen Ende und dem unteren Ende angeordnet ist, wobei die Lücke den Zylinderabschnitt in einen oberen Zylinderabschnitt (38) und einen unteren Zylinderabschnitt (40) trennt;
einen ersten Durchgang (42) im oberen Zylinderabschnitt, wobei der erste Durchgang im Wesentlichen mit der Längsachse ausgerichtet ist; und
einen zweiten Durchgang (44) im unteren Zylinderabschnitt, wobei der zweite Durchgang im Wesentlichen mit der Längsachse ausgerichtet ist,
wobei:
das Scharnier ferner einen dritten Durchgang (47) umfasst, der im Wesentlichen mit der Längsachse ausgerichtet ist;
ein Scharnierstift (48) durch den ersten Durchgang, den dritten Durchgang und den zweiten Durchgang hindurchgeht; und
die Tür so angepasst ist, dass sie sich um die Längsachse dreht, um sich zwischen der offenen Position und der geschlossenen Position zu bewegen.

8. Isolierter Transportkasten nach Anspruch 7, wobei die Tür eine Mittelebene (66) aufweist, die zwischen der hinteren Fläche der Tür (65) und der vorderen Fläche der Tür (64) angeordnet ist, wobei die Mittelebene im Wesentlichen parallel zu der vorderen Fläche und der hinteren Fläche ist und die Längsachse von der Mittelebene versetzt ist.

9. Isolierter Transportkasten nach Anspruch 8, wobei die erste Rippe der Tür und die Nut des Gehäuses vollständig außer Eingriff sind, wenn die Tür um mehr als oder gleich etwa 3° um die Längsachse aus der geschlossenen Position geschwenkt ist.

10. Isolierter Transportkasten nach Anspruch 7, ferner umfassend eine Verriegelung (22), die umfasst:
ein feststehendes Ende (96), das schwenkbar mit dem Gehäuse verbunden ist;
ein freies Ende (98);
einen Schaft (100), der sich zwischen dem festen Ende und dem freien Ende erstreckt; und
einen Halter (102) neben dem freien Ende;
wobei die Verriegelung angepasst ist, um zwischen einer entriegelten Position und einer verriegelten Position zu schwenken; und
wobei der Schaft der Verriegelung wenigstens teilweise in einem Verriegelungsschlitz (106) angeordnet ist und
eine hintere Fläche des Halters (108) in eine vordere Fläche der Tür eingreift, wenn sich der Riegel in einer verriegelten Position befindet, um die Tür in der geschlossenen Position zu halten.

11. Isolierter Transportkasten nach Anspruch 1, wobei die erste Nut und die erste Rippe konfiguriert sind, um eine fluiddichte Abdichtung zu erzeugen, wenn sich die Tür in der geschlossenen Position befindet, um Fluidlecks zu verhindern.

12. Isolierter Transportkasten nach Anspruch 2, wobei ein Querschnitt von jeder der oberen Rippe, der unteren Rippe und der ersten Seitenrippe quer zu einer entsprechenden Länge der oberen Rippe, der unteren Rippe und der ersten Seitenrippe entlang der jeweiligen Länge von jeder der oberen Rippe, der unteren Rippe und der ersten Seitenrippe ungleichmäßig ist.

## Revendications

1. Armoire de transport isolée pour produits alimentaires et analogues, incluant une structure de montage et d'étanchéité de porte, comprenant :
un boîtier (16) comprenant :
un compartiment intérieur (24) comportant une paroi périphérique (86) ; et
une première rainure (85) s'étendant dans la paroi périphérique ; et
une porte (18) comprenant :
une première surface latérale (46), une deuxième surface latérale (93) opposée à la première surface latérale, et une surface arrière (65) substantiellement perpendiculaire à la première surface latérale et à la deuxième surface latérale ; et
une charnière (20) adjacente à la première surface latérale et formée intégralement avec celle-ci ; la porte étant reliée de façon pivotante au boîtier à l'aide de la charnière, et la porte étant adaptée pour pivoter entre une position ouverte et une position fermée,
**caractérisée en ce que**
l'armoire de transport isolée comprend une structure d'étanchéité (83) destinée à isoler le compartiment intérieur (24) par rapport à l'environnement extérieur,
la structure d'étanchéité (83) comprend une première nervure (84) s'étendant le long d'une partie au moins d'un périmètre de la porte, laquelle est adjacente à la surface arrière, la nervure étant formée et
dimensionnée pour compléter la première rainure du boîtier, et
la première nervure comprend une nervure supérieure engageant la première rainure du boîtier lorsque la porte est dans la position fermée, la nervure supérieure s'étendant sur une longueur et étant effilée le long de la longueur, de sorte qu'une hauteur de section transversale (91) de la nervure supérieure au niveau d'un centre longitudinal de la nervure supérieure est plus grande qu'une hauteur de section transversale de la nervure supérieure à des extrémités longitudinales opposées de la nervure supérieure.

2. Armoire de transport isolée selon la revendication 1, dans laquelle la nervure supérieure (87) est disposée de façon adjacente à une surface supérieure (88) de la porte, et dans laquelle la première nervure comprend en outre une nervure inférieure (81) disposée de façon adjacente à une surface inférieure de la porte, ainsi qu'une première nervure latérale (89) disposée de façon adjacente à la première surface latérale de la porte.

3. Armoire de transport isolée selon la revendication 2, dans laquelle chacune parmi la nervure supérieure, la nervure inférieure et la première nervure latérale s'étend sur une longueur et inclut une largeur (90) et une hauteur (91) substantiellement perpendiculaire à la largeur, et dans laquelle la largeur de chacune parmi la nervure supérieure, la nervure inférieure et la première nervure latérale est effilée de manière à être plus grande au niveau d'un centre longitudinal qu'au niveau d'extrémités longitudinales opposées.

4. Armoire de transport isolée selon la revendication 3, dans laquelle à la fois la largeur et la hauteur de chacune parmi la nervure supérieure, la nervure inférieure et la première nervure latérale sont effilées de telle façon que la largeur est plus grande au niveau du centre longitudinal qu'au niveau d'extrémités longitudinales opposées et que la hauteur est plus grande au niveau du centre longitudinal qu'au niveau d'extrémités longitudinales opposées.

5. Armoire de transport isolée selon la revendication 2, dans laquelle un coin du périmètre de la porte adjacent à la surface supérieure et à la deuxième surface latérale inclut une partie plate (92).

6. Armoire de transport isolée selon la revendication 1, dans laquelle :
une surface avant (26) du boîtier inclut une deuxième rainure (95) et la surface arrière de la porte inclut une deuxième nervure (94) dimensionnée et formée pour compléter la deuxième rainure ;
la deuxième nervure est substantiellement parallèle à la deuxième surface latérale de la porte et disposée de façon adjacente à la deuxième surface de la porte ; et
la deuxième nervure engage la deuxième rainure lorsque la porte est dans la position fermée.

7. Armoire de transport isolée selon la revendication 1, dans laquelle :
le boîtier comprend en outre :
une partie de cylindre (28) adjacente à une surface avant (26) et s'étendant entre une extrémité supérieure (30) et une extrémité inférieure (32), la partie de cylindre comprenant :
un axe longitudinal (34) s'étendant à travers un centre de la partie de cylindre ;
un espace (36) situé entre l'extrémité supérieure et
l'extrémité inférieure, l'espace divisant la partie de cylindre en une section cylindrique supérieure (38) et une section cylindrique inférieure (40) ;
un premier passage (42) dans la section cylindrique supérieure, le premier passage étant substantiellement aligné avec l'axe longitudinal ; et
un deuxième passage (44) dans la section cylindrique inférieure, le deuxième passage étant substantiellement aligné avec l'axe longitudinal, dans laquelle :
la charnière comprend en outre un troisième passage (47) substantiellement aligné avec l'axe longitudinal ;
une broche de charnière (48) traverse le premier passage, le troisième passage et le deuxième passage ; et
la porte est adaptée pour pivoter autour de l'axe longitudinal pour se déplacer entre la position ouverte et la position fermée.

8. Armoire de transport isolée selon la revendication 7, dans laquelle la porte inclut un plan central (66) disposé entre la surface arrière de la porte (65) et la surface avant de la porte (64), le plan central étant substantiellement parallèle à la surface avant et à la surface arrière, et l'axe longitudinal étant décalé par rapport au plan central.

9. Armoire de transport isolée selon la revendication 8, dans laquelle la première nervure de la porte et la rainure du boîtier sont entièrement désengagées lorsque la porte est pivotée d'environ 3° ou plus autour de l'axe longitudinal à partir de la position fermée.

10. Armoire de transport isolée selon la revendication 7, comprenant en outre un verrou (22) comprenant :
une extrémité fixe (96) reliée de façon pivotante au boîtier ;
une extrémité libre (98) ;
une tige (100) s'étendant entre l'extrémité fixe et l'extrémité libre ; et
un support (102) adjacente à l'extrémité libre ;
dans laquelle le verrou est adapté pour pivoter entre une position déverrouillée et une position verrouillée ; et
dans laquelle la tige du verrou est au moins partiellement disposée dans une fente de verrou (106) et une surface arrière du support (108) engage une surface avant de la porte lorsque le verrou est dans une position verrouillée afin de maintenir la porte dans la position fermée.

11. Armoire de transport isolée selon la revendication 1, dans laquelle la première rainure et la première nervure sont configurées pour créer un joint étanche aux fluides lorsque la porte est dans la position fermée, afin d'empêcher les fuites de fluide.

12. Armoire de transport isolée selon la revendication 2, dans laquelle une section transversale de chacune parmi la nervure supérieure, la nervure inférieure et la première nervure latérale, vue transversalement à une longueur respective de chacune parmi la nervure supérieure, la nervure inférieure et la première nervure latérale, est non uniforme le long de la longueur respective de chacune parmi la nervure supérieure, la nervure inférieure et la première nervure latérale.
